Europäisches Patentamt

European Patent Office

Office européen des brevets

(19)

(11) Veröffentlichungsnummer: **0 016 965**
**B1**

(12) **EUROPÄISCHE PATENTSCHRIFT**

(45) Veröffentlichungstag der Patentschrift:
27.07.83

(51) Int. Cl.³: **F 16 L 5/00**

(21) Anmeldenummer: **80100969.7**

(22) Anmeldetag: **27.02.80**

(54) Einrichtung zur Kompensierung von Gebäudesetzungen.

(30) Priorität: **03.03.79 DE 2908389**

(43) Veröffentlichungstag der Anmeldung:
**15.10.80 Patentblatt 80/21**

(45) Bekanntmachung des Hinweises auf die Patenterteilung:
**27.07.83 Patentblatt 83/30**

(84) Benannte Vertragsstaaten:
**AT CH FR IT**

(56) Entgegenhaltungen:
**CH-A-40 231**
**DE-A-2 528 051**
**DE-U-1 916 590**
**US-A-3 385 605**

(73) Patentinhaber: **BROWN BOVERI REAKTOR GmbH,
Dudenstrasse 44, D-6800 Mannheim 1 (DE)**

(72) Erfinder: **Krausz, Eduard, Ing-Grad,
Eisenacherstrasse 15, D-6114 Gross-Umstadt (DE)**

BUNDESDRUCKEREI BERLIN

Einrichtung zur Kompensierung von Gebäudesetzungen

Die Erfindung betrifft eine Einrichtung zur Kompensierung von Gebäudesetzungen, die im Bereich von Rohrleitungen auftreten, welche vom Erdreich durch eine Wand in ein Gebäude führen, wobei eine Rohrleitung durch ein Mauerrohr geführt ist, das an seinem in das Erdreich ragenden Ende einen Hohlkörper aufweist, dessen Radialmaße größer sind als die des Mauerrohres und an seiner Stirnseite eine Öffnung zum Durchführen der Rohrleitung besitzt.

Zur Aufnahme derartiger Gebäudesetzungen ist es allgemein bekannt, zwischen Mauerrohr und Rohrleitungen Kompensatoren anzubringen. Diese Anordnung hat jedoch den Nachteil, daß aufgrund der umgebenden Erdmassen die Elastizität der Kompensatoren verloren geht. Die Rohrleitung ist dann gewissermaßen fest im Erdreich eingespannt und kann der Setzbewegung des Gebäudes nicht folgen. Dieser Zustand führt zu Materialspannungen mit möglicherweise nachfolgendem Riß oder Bruch der Rohrleitung. Je nachdem welches Medium in der Rohrleitung enthalten ist können die Folgen unangenehm bis bedrohlich für mittel- oder unmittelbar Betroffene sein.

Aus der DE-A-2 528 051 ist eine Dichtungsvorrichtung für eine Mauer-Rohrdurchführung bekannt. Das Mauerrohr ist dazu an seinen freien Enden jeweils mit einer einseitig offenen Nabe versehen in deren Hohlraum unter Verwendung eines in die Nabe einschraubbaren Deckels eine Dichtscheibe eingeklemmt ist. Eine Bohrung der Dichtscheibe ist von einer Rohrleitung derart durchsetzt, daß zwischen dem Umfang des Rohres und der Bohrung eine Dichtwirkung eintritt. Dabei bilden die Nabe und der einschraubbare Deckel einen Hohlkörper, dessen Radialmaße größer sind als die des Mauerrohres. Mit dieser Dichtungsvorrichtung soll beim Montieren der Rohrleitung auch bei Exzentrizität zwischen Rohrleitung und Mauerrohr die nötige Dichtigkeit gewährleistet sein. Durch den relativ großen Anpreßdruck, der durch den einschraubbaren Deckel auf die Seitenfläche der Dichtscheibe ausgeübt wird, ist ein Verschieben nach der Montage nicht erwünscht.

Eine Einrichtung zur Kompensierung von Gebäudesetzungen mit Merkmalen gemäß dem Oberbegriff des Anspruches 1 zeigt das DE-U-1 916 590.

Demgegenüber stellt sich die Erfindung die Aufgabe eine Einrichtung anzugeben mit deren Hilfe eine Beschädigung einer Rohrleitung aufgrund von Gebäudesetzungen verhindert wird.

Gelöst wird die Aufgabe erfindungsgemäß dadurch, daß der Hohlkörper an seiner nach unten gerichteten Seite offen ist, daß die Öffnung die gleiche lichte Weite wie das Mauerrohr besitzt, und daß die Rohrleitung im unteren Bereich dieser Öffnung durchgeführt ist.

Damit wird sichergestellt, daß ein von der lichten Weite des Mauerrohres abhängiger Setzungsweg ohne Beschädigung der Rohrleitung kompensiert werden kann.

Anhand eines Ausführungsbeispiels und der schematischen Zeichnungen Fig. 1 bis 5 wird die erfindungsgemäße Einrichtung beschrieben. Dabei zeigt

Fig. 1 den Teilbereich eines Gebäudes mit einer Rohrdurchführung gem. der Erfindung.

Fig. 2 eine Ansicht in Pfeilrichtung II der Fig. 1,

Fig. 3 einen Querschnitt nach der Linie III-III der Fig. 2,

Fig. 4 eine andere Ausbildung der erfindungsgemäßen Einrichtung gem. der Fig. 1 und

Fig. 5 eine Ansicht in Pfeilrichtung V der Fig. 4.

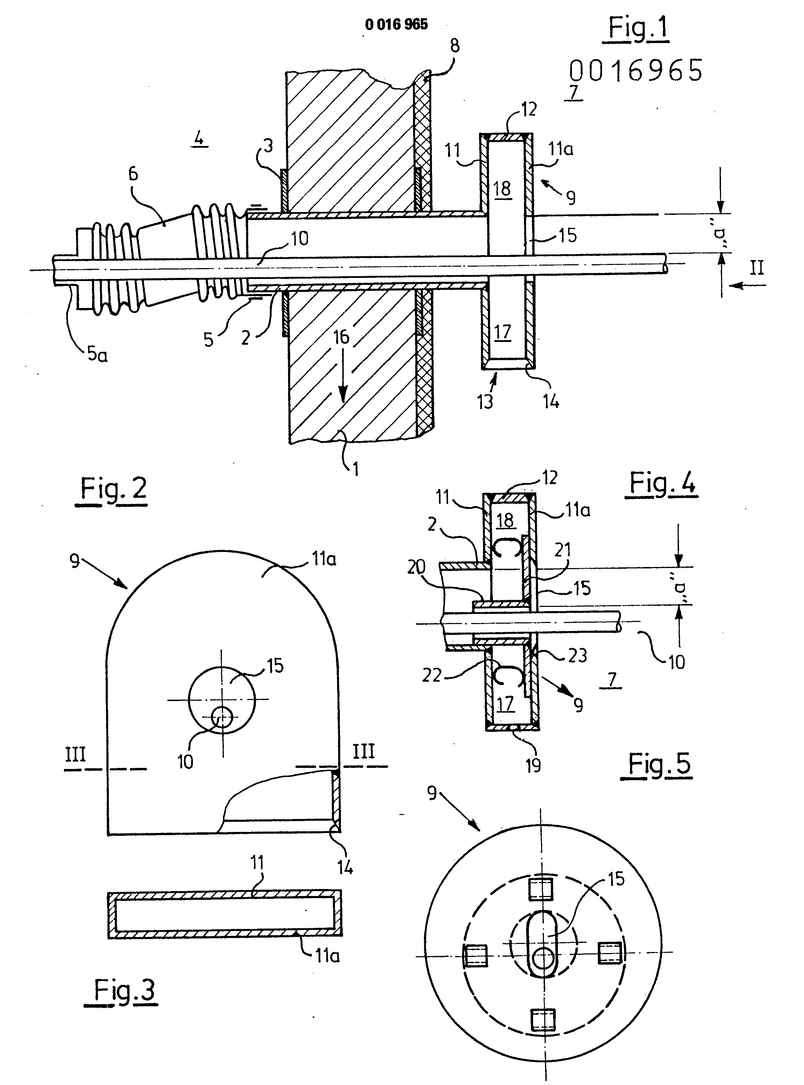

Aus Fig. 1 ist die Wand 1 eines nicht weiter dargestellten Gebäudes zu ersehen in die ein Mauerrohr 2 eingelassen ist das mittels daran befestigter Flansche 3 mit der Wand 1 verbunden ist.

An dem zum Gebäudeinnenraum 4 zugewandten Ende des Mauerrohres 2 ist mittels eines Klemmringes oder Schweißnaht 5 ein Faltenbalg 6 befestigt. Die Außenseite der Wand 1 ist mit Erde 7 bedeckt und ist deshalb mit einer Isolierung 8 versehen. Durch das Mauerrohr 2 führt eine Rohrleitung 10 vom Gebäudeinnenraum 4 durch das Erdreich 7 zu einer nicht dargestellten Verbindungsleitung oder einem ebenfalls nicht dargestellten Gebäude. In einer derartigen Rohrleitung können flüssige oder gasförmige Medien verschiedener Gefahrenklassen strömen. Der Faltenbalg 6 ist mit der Rohrleitung 10 mit Hilfe eines Klemmringes oder Schweißnaht 5a verbunden, so daß der Gebäudeinnenraum 4 abgedichtet ist. Ein Hohlkörper 9 ist an dem ins Erdreich 7 ragenden Ende des Mauerrohres angeschweißt. Der Hohlkörper ist eine Schweißkonstruktion die aus zwei Seitenblechen 11, 11a und einen Blechband 12 besteht. An seiner nach unten gerichteten Seite 13 ist der Hohlkörper offen wie auch aus den Fig. 2 und 3 zu erkennen ist. Die Kanten 14 dieser Seite 13 sind angeschrägt. Das Seitenblech 11a bildet die Stirnseite des Hohlkörpers 9. Diese Stirnseite weist eine Öffnung 15 auf, welche die gleiche lichte Weite wie die des Mauerrohres 2 hat. Erfolgt eine Gebäudesetzung (Pfeilrichtung 16), so bleibt die Rohrleitung 10 in ihrer Lage stehen, während das Mauerrohr 2 mit dem angeschweißten Hohlkörper 9 einen Setzungweg »a« zurücklegt. Der Setzungsweg wird bei der Gebäudeplanung mit einem ausreichenden Sicherheitszuschlag festgelegt. Durch die Öffnung 15 eindringendes Erdreich sammelt sich im unteren Teil 17 des Hohlkörpers bzw. wird bei einer Setzbewegung der Wand 1 in den oberen Teil 18 des Hohlkörpers geschoben.

Die Fig. 4 und 5 zeigen eine andere Ausbildung des Hohlkörpers 9. Die Schweißkonstruktion des Hohlkörpers 9 besteht hier ebenfalls aus Seitenteilen 11, 11a und einem Blechband 12. Das Blechband 12 schließt den Hohlkörper 9 an seinem Umfang ein. Lediglich am unteren Umfangsbereich befindet sich eine Bohrung 19 zur Entwässerung des unteren Teiles 17. Ein Ring 20 ist über die Rohrleitung 10 geschoben. An diesem Ring ist eine Scheibe 21 angeschweißt deren Außendurchmesser größer ist als die lichte Weite der Öffnung 15. Über die Federn oder elastischen Puffern 22 wird die Scheibe 21 gegen das Seitenteil 11a gedrückt, so daß die Öffnung 15 abgedeckt ist. Die Öffnung 15 befindet sich im Seitenteil 11a und ist als Langloch ausgebildet. Seine Länge entspricht der lichten Weite des Mauerrohres 2 und seine Breite ist kleiner als diese lichte Weite jedoch größer als der Außendurchmesser der Rohrleitung 10. Der Rand 23 des Langloches ist schneidenförmig ausgebildet damit eine Trennung des Schüttgutes im Bereich der Öffnung 15 erfolgen kann. Erfolgt eine Setzbewegung der Wand 1, so bleibt die Rohrleitung 10 mit dem Ring 20 und der Scheibe 21 in ihrer Lage stehen. Das Mauerrohr mit dem Hohlkörper macht die Setzbewegung mit. Dabei gleitet die Innenseite des Seitenteiles 11a an der Scheibe 21. Nur geringe Mengen des Schüttgutes wie z. B. Erdreich 7 rutschen dann, von dem schneidenförmig ausgebildeten Rand 23 der Öffnung 15 zerkleinert, in den unteren Teil 17 des Hohlkörpers 9.

Mit der erfindungsgemäßen Einrichtung werden die nachteiligen Folgen eines durch Gebäudesetzungen verursachten Rohrbruchs verhindert.

## Patentanspruch

Einrichtung zur Kompensierung von Gebäudesetzungen, die im Bereich von Rohrleitungen auftreten, welche vom Erdreich durch eine Wand in eine Gebäude führen, wobei eine Rohrleitung (10) durch ein Mauerrohr (2) geführt ist, das an seinem in das Erdreich ragenden Ende einen Hohlkörper (9) aufweist, dessen Radialmaße größer sind als die des Mauerrohres und an seiner Stirnseite eine Öffnung (15) zum Durchführen der Rohrleitung besitzt, dadurch gekennzeichnet, daß der Hohlkörper an seiner nach unten gerichteten Seite (13) offen ist, daß die Öffnung (15) die gleiche lichte Weite wie das Mauerrohr besitzt, und daß die Rohrleitung (10) im unteren Bereich dieser Öffnung (15) durchgeführt ist.

## Claim

A device to compensate for subsidence of buildings occurring in the region of pipes which enter a building from the soil through a wall, where the piping (10) passes through a wall pipe (2) which is fitted at the end protruding into the soil with a hollow body (9) whose radial dimensions are larger than those of the wall pipe and which has an opening (15) at its front end through which the piping passes, characterized in that the hollow body is open on its downward facing side (13), that the opening (15) has the same inside diameter as the wall pipe, and that the piping (10) passes through the lower region of this opening (15).

## Revendication

Dispositif de compensation des tassements de constructions, qui surviennent au voisinage de canalisations tubulaires, qui mènent du terrain à travers une paroi dans un bâtiment, une canalisation tubulaire (10) étant conduite à travers un tube mural (2) qui, à son extrémité pénétrant dans le terrain, présente un corps creux (9) dont les dimensions radiales sont plus grandes que celles du tube mural et qui comporte sur son côté avant un orifice (15) pour la traversée de la canalisation tubulaire, caractérisé en ce que le corps creux est ouvert sur son côté (13) dirigé vers le bas, en ce que l'orifice (15) possède la même largeur interne que le tube mural et en ce que la canalisation tubulaire (10) est conduite dans la zone inférieure de cet orifice (15).

Fig.1

0016965

Fig.2

Fig.4

Fig.3

Fig.5